(19) Europäisches Patentamt
European Patent Office
Office européen des brevets

(11) **EP 4 131 471 A1**

(12) **EUROPEAN PATENT APPLICATION**
published in accordance with Art. 153(4) EPC

(43) Date of publication:
**08.02.2023 Bulletin 2023/06**

(21) Application number: **21779999.8**

(22) Date of filing: **23.03.2021**

(51) International Patent Classification (IPC):
$H01M\ 4/131^{(2010.01)}$  $H01M\ 4/36^{(1974.07)}$
$H01M\ 4/505^{(2010.01)}$  $H01M\ 4/525^{(2010.01)}$
$H01M\ 4/62^{(1974.07)}$  $H01M\ 10/052^{(2010.01)}$

(52) Cooperative Patent Classification (CPC):
H01M 4/131; H01M 4/36; H01M 4/505;
H01M 4/525; H01M 4/62; H01M 10/052;
Y02E 60/10

(86) International application number:
**PCT/JP2021/011954**

(87) International publication number:
**WO 2021/200397 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020062541**

(71) Applicant: **Panasonic Intellectual Property
Management Co., Ltd.
Osaka-shi, Osaka 540-6207 (JP)**

(72) Inventors:
• **UKA Youichirou
Chuo-ku, Osaka-shi, Osaka 540-6207 (JP)**
• **MASAHARA Koh
Chuo-ku, Osaka-shi, Osaka 540-6207 (JP)**
• **HARADA Tomohiro
Chuo-ku, Osaka-shi, Osaka 540-6207 (JP)**
• **YAMAMOTO Rina
Chuo-ku, Osaka-shi, Osaka 540-6207 (JP)**
• **OKAZAKI Tomohisa
Chuo-ku, Osaka-shi, Osaka 540-6207 (JP)**

(74) Representative: **Novagraaf International SA
Chemin de l'Echo 3
1213 Onex, Geneva (CH)**

(54) **POSITIVE ELECTRODE FOR SECONDARY BATTERIES, AND SECONDARY BATTERY**

(57)   This positive electrode for secondary batteries is provided with a positive electrode collector and a positive electrode mixture layer that is arranged on the positive electrode collector. The positive electrode mixture layer contains a positive electrode active material that contains a lithium-transition metal composite oxide and carbon fibers each having an outermost peripheral diameter of 20 nm or less; the lithium-transition metal composite oxide contains 80% by mole or more of Ni relative to the total number of moles of metal elements excluding Li; an alkaline earth metal element is present on the particle surfaces of the oxide; and the content of the carbon fibers relative to the total amount of the positive electrode active material is from 0.01% by mass to 1.0% by mass.

EP 4 131 471 A1

**Description**

TECHNICAL FIELD

The present disclosure relates to a positive electrode for secondary batteries and to a secondary battery.

BACKGROUND

In recent years, a lithium-transition metal composite oxide having a high Ni content has attracted attention as a positive electrode active material having a high energy density. For example, Patent Literature 1 discloses a non-aqueous electrolyte secondary battery including a composite oxide, as a positive electrode active material, including single crystal primary particles that mainly include Ni and Li, have the general formula of $Li_xNi_{1-p-q-r}Co_pAl_qA_rO_{2-y}$ (A represents at least one element selected from the group consisting of Ti, V, In, Cr, Fe, Sn, Cu, Zn, Mn, Mg, Ga, Ni, Co, Zr, Bi, Ge, Nb, Ta, Be, Ca, Sr, Ba, and Sc), and have an average particle diameter of 2 $\mu$m to 8 $\mu$m.

CITATION LIST

PATENT LITERATURE

Patent Literature 1: JP 2006-54159 A

SUMMARY

When a lithium-transition metal composite oxide having a high Ni content is used as a positive electrode active material, there is a problem of capacity reduction accompanying a charge-discharge cycle of a secondary battery.
A positive electrode for secondary batteries of an aspect of the present disclosure includes a positive electrode current collector and a positive electrode mixture layer disposed on the positive electrode current collector, the positive electrode mixture layer includes a positive electrode active material including a lithium-transition metal composite oxide and includes carbon fibers having an outermost diameter of 20 nm or less, the lithium-transition metal composite oxide includes 80 mol% or more of Ni based on a total number of moles of metal elements excluding Li, the lithium-transition metal composite oxide includes particles having a surface on which an alkaline earth metal element is present, and a content of the carbon fibers is 0.01 mass% or more and 1 mass% or less based on a total amount of the positive electrode active material.
A secondary battery of an aspect of the present disclosure includes a positive electrode and a negative electrode, and the positive electrode is the above-described positive electrode for secondary batteries.
By using the positive electrode for secondary batteries according to the present disclosure, capacity reduction accompanying a charge-discharge cycle of a secondary battery can be suppressed.

BRIEF DESCRIPTION OF DRAWING

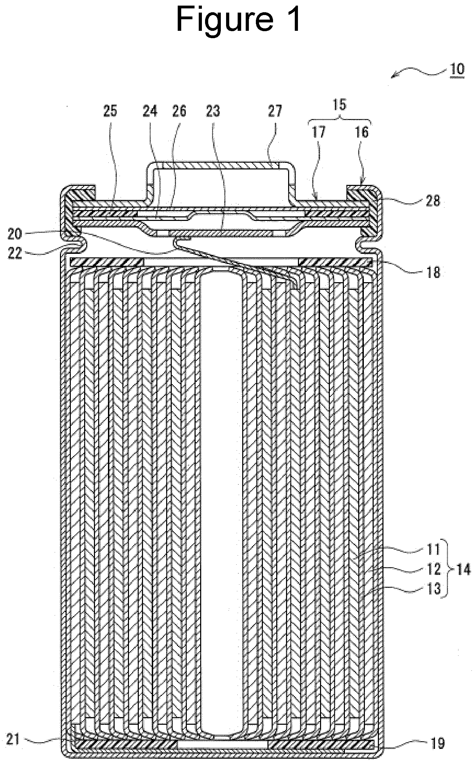

FIG. 1 is a sectional view of a non-aqueous electrolyte secondary battery of an example of an embodiment.

DESCRIPTION OF EMBODIMENTS

A positive electrode for secondary batteries of an aspect of the present disclosure includes a positive electrode current collector and a positive electrode mixture layer disposed on the positive electrode current collector, the positive electrode mixture layer includes a positive electrode active material including a lithium-transition metal composite oxide and includes carbon fibers having an outermost diameter of 20 nm or less, the lithium-transition metal composite oxide includes 80 mol% or more of Ni based on a total number of moles of metal elements excluding Li, the lithium-transition metal composite oxide includes particles having a surface on which an alkaline earth metal element is present, and a content of the carbon fibers is 0.01 mass% or more and 1 mass% or less based on a total amount of the positive electrode active material. According to the present disclosure, the alkaline earth metal element present on the particle surface of the lithium-transition metal composite oxide suppresses, for example, a side reaction between a non-aqueous electrolyte of a secondary battery and the lithium-transition metal composite oxide, so that the particle surface of the lithium-transition metal composite oxide is modified to suppress inhibition of lithium ion movement, occurrence of particle cracking, and the like. Furthermore, according to the present disclosure, the positive electrode mixture layer includes the carbon fibers having an outermost diameter of 20 nm or less in the predetermined amount, and this fact ensures, for example, a conductive path in the positive electrode mixture layer. It is considered that although the positive electrode for secondary batteries of the present disclosure includes a lithium-transition metal composite oxide having a high Ni content, capacity reduction accompanying a charge-discharge cycle of a secondary battery is suppressed by the synergistic effect of the particle surface modification and the suppression of particle cracking with the ensuring of a conductive path in the positive electrode mixture layer.

Hereinafter, embodiments of the positive electrode for secondary batteries and the secondary battery according to the present disclosure will be described in detail with reference to the drawing. In the present description, the expression "a numerical value (1) to a numerical value (2)" means the numerical value (1) or more and the numerical value (2) or less.

FIG. 1 is a sectional view of a secondary battery of an example of an embodiment. A secondary battery 10 shown in FIG. 1 includes a wound electrode assembly 14 in which a positive electrode 11 and a negative electrode 12 are wound with a separator 13 interposed therebetween, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (laminated batteries) formed by lamination with a resin sheet.

The case body 16 is, for example, a bottomed cylindrical metal container. A gasket 28 is provided between the case body 16 and the sealing assembly 17 to ensure the sealability inside the battery. The case body 16 has an inward protrusion 22 in which, for example, a part of the side part of the case body 16 protrudes inward to support the sealing assembly 17. The inward protrusion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are stacked in this order from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the inner surface of the bottom of the case body 16 by welding or the like, and the case body 16 serves as a negative electrode terminal.

Hereinafter, the positive electrode 11, the negative electrode 12, the separator 13, and the non-aqueous electrolyte included in the secondary battery 10 will be described in detail.

[Positive Electrode]

The positive electrode 11 includes a positive electrode current collector and a positive electrode mixture layer formed on the positive electrode current collector. As the positive electrode current collector, a foil of a metal, such as aluminum or an aluminum alloy, that is stable in a potential range of the positive electrode, a film in which the metal is disposed on its surface layer, or the like can be used. The positive electrode mixture layer includes, for example, a positive electrode mixture including a positive electrode active material, a binder, a conductive agent, and the like. The positive electrode mixture layer is preferably formed on both surfaces of the positive electrode current collector. The positive electrode 11 can be manufactured by, for example, applying a positive electrode mixture slurry including a positive electrode active material, a binder, a conductive agent, and the like to a positive electrode current collector, and drying and rolling the applied film to form a positive electrode mixture layer on both surfaces of the positive electrode current collector.

The conductive agent included in the positive electrode mixture layer includes carbon fibers having an outermost diameter (fiber diameter) of 20 nm or less. The content of the carbon fibers is 0.01 mass% or more and 1 mass% or less, and preferably 0.01 mass% or more and 0.5 mass% or less, based on the total amount of the positive electrode active material. Examples of the carbon fibers include known materials used as a conductive agent of a battery, such as carbon nanotubes (CNTs), carbon nanofibers (CNFs), vapor grown carbon fibers (VGCFs), electrospun carbon fibers, polyacrylonitrile (PAN)-based carbon fibers, and pitch-based carbon fibers.

The fact that the positive electrode mixture layer includes the carbon fibers having an outermost diameter of 20 nm or less in the predetermined amount ensures a conductive path in the positive electrode mixture layer, and contributes to suppression of capacity reduction accompanying a charge-discharge cycle. If the content of the carbon fibers is less than 0.01 mass%, a conductive path in the positive electrode mixture layer is not sufficiently ensured, and if the content of the carbon fibers is more than 1 mass%, the movement of the non-aqueous solvent and the electrolyte in the positive electrode mixture layer is likely to be inhibited. In both these cases, capacity reduction accompanying a charge-discharge cycle is not suppressed.

The carbon fibers preferably have an outermost diameter of, for example, 1 nm or more and 20 nm or less, and more preferably 1.5 nm or more and 10 nm or less from the viewpoints of improving the conductivity of the carbon fibers itself and, as a result of improvement in the conductivity, ensuring a conductive path in the positive electrode mixture layer by adding a small amount of the carbon fibers, and the like. The outermost diameter of the carbon fibers can be determined by measuring the outer diameters of 50 arbitrary carbon fibers with a field-emission scanning electron microscope (FE-SEM) or a transmission electron microscope (TEM) and arithmetically averaging the outer diameters.

The carbon fibers preferably have a fiber length of, for example, 0.1 $\mu$m or more and 20 $\mu$m or less, more preferably 1 $\mu$m or more and 10 $\mu$m or less, and still more preferably 1 $\mu$m or more and 5 $\mu$m or less in order to ensure a conductive path between active materials in the positive electrode mixture layer. The fiber length of the carbon fibers can be determined by measuring the lengths of 50 arbitrary carbon fibers with a field-emission scanning electron microscope (FE-SEM) and arithmetically averaging the lengths.

Among the carbon fibers exemplified above, the carbon fibers preferably include, for example, a carbon nanotube from the viewpoints of further suppressing capacity reduction accompanying a charge-discharge cycle, and the like. Examples of the carbon nanotube include single-walled carbon nanotubes, double-walled carbon nanotubes, and multi-walled carbon nanotubes. The single-walled carbon nanotube (SWCNT) is a carbon nanostructure in which one graphene sheet forms one cylindrical shape, the double-walled carbon nanotube is a carbon nanostructure in which two graphene sheets are concentrically layered to form one cylindrical shape, and the multi-walled carbon nanotube is a carbon nanostructure in which three or more graphene sheets are concentrically layered to form one cylindrical shape. The graphene sheet refers to a layer in which a carbon atom in an sp2 hybrid orbital forming a crystal of graphite is located at an apex of a regular hexagon. The shape of the carbon nanotube is not limited. Examples of the shape include various forms including needle shapes, cylindrical tube shapes, fishbone shapes (fishbone or cup-stacked type), trump shapes (platelets), and coil shapes.

The carbon nanotube included in the positive electrode mixture layer is preferably a single-walled carbon nanotube. The amount of the single-walled carbon nanotube that forms a conductive path in the positive electrode mixture layer is generally smaller than that of the multi-walled carbon nanotube, and therefore it is considered that if the positive electrode mixture layer includes a small amount of the single-walled carbon nanotube, the non-aqueous solvent and the electrolyte easily move in the positive electrode mixture layer. The positive electrode mixture layer may include not only a single-walled carbon nanotube but also a double-walled carbon nanotube and a multi-walled carbon nanotube.

The positive electrode active material included in the positive electrode mixture layer includes a lithium-transition metal composite oxide. The lithium-transition metal composite oxide includes 80 mol% or more of Ni based on the total number of moles of metal elements excluding Li. The lithium-transition metal composite oxide includes particles having a surface on which an alkaline earth metal element is present. The alkaline earth metal element present on the particle surface is, for example, in the state of a metal, an alloy, or a compound such as an oxide. The term "particle surface" refers to a primary particle surface or a secondary particle surface. The alkaline earth metal element may be partially present inside the primary particles of the lithium-transition metal composite oxide and form a solid solution together with another metal element included in the lithium-transition metal composite oxide. Hereinafter, this lithium-transition metal composite oxide is sometimes referred to as a composite oxide A.

The alkaline earth metal element refers to an element of Group 2 in the periodic table, and examples of the alkaline earth metal element include beryllium, magnesium, calcium, strontium, barium, and radium. It is considered that the presence of the alkaline earth metal element on the particle surface of the composite oxide A suppresses particle surface modification, particle cracking, and the like in the composite oxide A caused by a side reaction with a non-aqueous electrolyte, and contributes to suppression of capacity reduction accompanying a charge-discharge cycle.

The composite oxide A is preferably represented by, for example, a general formula of $Li_yNi_{(1-x)}M_xO_2$ (wherein $0 \leq x \leq 0.2$, $0 < y \leq 1.2$, and M represents one or more elements selected from Co, Al, Mn, Fe, Ti, Sr, Ca, and B) excluding the alkaline earth metal element present on the particle surface of the composite oxide A from the viewpoints of increasing the energy density of a battery, suppressing capacity reduction of the battery in a charge-discharge cycle, and the like. From the viewpoint of, for example, increasing the capacity of the battery, y in the general formula preferably satisfies $0.95 \leq y < 1.05$, and more preferably satisfies $0.97 \leq a \leq 1.03$. Furthermore, for example, M in the general formula is preferably one or more elements selected from Co, Al, and Mn from the viewpoints of suppressing battery capacity reduction in a charge-discharge cycle, and the like.

The content of Ni in the composite oxide A is, for example, preferably 85 mol% or more, and more preferably 90 mol% or more, based on the total number of moles of metal elements excluding Li from the viewpoints of increasing the capacity of a battery, and the like. In the case of the composite oxide A represented by the above-described general formula, x in the formula preferably satisfies $x \leq 0.15$, and more preferably satisfies $x \leq 0.1$. Furthermore, the content of Ni in the composite oxide A is, for example, preferably 98 mol% or less, and more preferably 95 mol% or less, based on the total number of moles of metal elements excluding Li from the viewpoints of suppressing capacity reduction accompanying a charge-discharge cycle, and the like. In the case of the composite oxide A represented by the above-described general formula, x in the formula preferably satisfies $0.02 \leq x$, and more preferably satisfies $0.05 \leq x$.

The alkaline earth metal element present on the particle surface of the composite oxide A preferably includes at least one of calcium (Ca) or strontium (Sr) from the viewpoints of suppressing capacity reduction accompanying a charge-discharge cycle, and the like. The content of the alkaline earth metal element present on the particle surface and inside the particles of the composite oxide A is preferably in the range of 0.01 mol% or more and 10 mol% or less, and more preferably in the range of 0.1 mol% or more and 5 mol% or less, based on the total number of moles of metal elements excluding Li.

The mole fraction of the metal elements in the whole particles (the surface and the inside of the particles) of the composite oxide A is measured by an inductively coupled plasma atomic emission spectrometer (ICP-AES), an electron beam microanalyzer (EPMA), an energy dispersive X-ray spectrometer (EDX), or the like. The presence state of the alkaline earth metal present on the surface of the composite oxide A can be confirmed, for example, by exposing the section of the composite oxide A with high accuracy using a polisher such as an ion milling cross section polisher and then measuring the section by an EDX or the like.

The composite oxide A includes particles having a volume-based median diameter (D50) of, for example, 3 $\mu$m to 30 $\mu$m, preferably 5 $\mu$m to 25 $\mu$m, and particularly preferably 7 $\mu$m to 15 $\mu$m. D50 means a particle diameter at which the cumulative frequency in the volume-based particle size distribution is 50% from the smallest particle size, and is also called a median diameter. The particle size distribution of the composite oxide A is measured using a laser diffraction-type particle size distribution measuring device (for example, MT3000II manufactured by MicrotracBEL Corp.).

The composite oxide A can be produced, for example, with the following procedure.

The method for manufacturing the composite oxide A includes, for example, a first step of obtaining a transition metal oxide including Ni and any metal element, a second step of mixing the transition metal oxide obtained in the first step, a Li compound, and a compound including an alkaline earth metal element to obtain a mixture, and a third step of firing the mixture.

In the first step, for example, while a solution of a metal salt including Ni and any metal element (such as Co, Al, or Mn) is stirred, an alkaline solution such as sodium hydroxide is added dropwise to adjust the pH to the alkali side (for example, 8.5 to 12.5), and thus a transition metal hydroxide including Ni and any metal element is precipitated (coprecipitated). Next, the transition metal hydroxide is fired to obtain a transition metal oxide including Ni and any metal element. The firing temperature is not particularly limited, but is, for example, in the range of 300°C to 600°C.

In the second step, the transition metal oxide obtained in the first step, a Li compound, and a compound including an alkaline earth metal element are dry-mixed to obtain a mixture. Examples of the Li compound include $Li_2CO_3$, LiOH, $Li_2O_2$, $Li_2O$, $LiNO_3$, $LiNO_2$, $Li_2SO_4$, $LiOH \cdot H_2O$, LiH, and LiF. Examples of the compound including an alkaline earth metal element include hydroxides, oxides, carbonates, sulfates, and nitrates of alkaline earth metal elements. For example, compounds including Ca include $Ca(OH)_2$, CaO, $CaCO_3$, $CaSO_4$, and $Ca(NO_3)_2$. Examples of the compound including Sr include $Sr(OH)_2$, $Sr(OH)_2 \cdot 8H_2O$, SrO, $SrCO_3$, $SrSO_4$, and $Sr(NO_3)_2$. The mixing ratio of the transition metal oxide obtained in the first step and the Li compound is, for example, preferably such that the molar ratio of metal elements excluding Li : Li is in the range of 1 : 0.98 to 1 : 1.1. The mixing ratio of the transition metal oxide obtained in the first step and the compound including an alkaline earth metal element is, for example, preferably such that the molar ratio of metal elements excluding Li : alkaline earth metal element is in the range of 1 : 0.0001 to 1 : 0.05. In the second step, when the transition metal oxide obtained in the first step, the Li compound, and the compound including an alkaline earth metal element are mixed, another metal raw material may be added as necessary. Another metal raw material is an oxide or the like including a metal element other than the metal elements included in the transition metal oxide obtained in the first step.

In the third step, the mixture obtained in the second step is preferably fired at 850°C or less for a predetermined time. The firing of the mixture in the third step preferably includes, for example, a multi-stage firing step including a first firing step of firing the mixture in a firing furnace under an oxygen stream to a first set temperature of 450°C to 680°C at a first temperature rise rate, and a second firing step of firing the fired product obtained in the first firing step in a firing furnace under an oxygen stream to a second set temperature of more than 680°C and 850°C or less at a second temperature rise rate. Here, it is preferable that the first temperature rise rate be in the range of 1.5°C/min to 5.5°C/min, and the second temperature rise rate be slower than the first temperature rise rate and in the range of 0.1°C/min to 3.5°C/min. A plurality of the first temperature rise rates and a plurality of the second temperature rise rates may be set within the respective ranges specified above in the respective temperature regions. The holding time of the first set temperature in the first firing step is preferably 5 hours or less, and more preferably 3 hours or less. The holding time of the first set temperature is a time during which the first set temperature is maintained after the first set temperature is reached. The holding time of the second set temperature in the second firing step is preferably 1 hour to 10 hours, and more preferably 1 hour to 5 hours. The holding time of the second set temperature is a time during which the second set temperature is maintained after the second set temperature is reached. The mixture is fired, for example, in an oxygen stream having an oxygen concentration of 60% or more, and the flow rate of the oxygen stream can be set in the range of 0.2 mL/min to 4 mL/min with respect to 10 $cm^3$ of a firing furnace and set to 0.3 L/min or more with respect to 1 kg of the mixture.

The content of the composite oxide A is, for example, preferably 90 mass% or more, and preferably 99 mass% or more, based on the total mass of the positive electrode active material from the viewpoints of improving the battery capacity, and the like. The positive electrode active material may include a lithium-transition metal composite oxide having a composition different from that of the composite oxide A.

The positive electrode mixture layer may include a particulate conductive agent, but preferably does not include a particulate conductive agent. If the positive electrode mixture layer does not include a particulate conductive agent, the filling amount of the positive electrode active material may be increased to improve the energy density of a battery. Examples of the particulate conductive agent include carbon materials such as carbon black, acetylene black, Ketjenblack, and graphite. When used, the particulate conductive agent preferably has a primary particle diameter of 5 nm or more and 100 nm or less.

Examples of the binder included in the positive electrode mixture layer include fluororesins such as polytetrafluoroethylene (PTFE) and polyvinylidene fluoride (PVDF), polyacrylonitrile (PAN), polyimides, acrylic resins, polyolefins, carboxymethylcellulose (CMC) and its salts, and polyethylene oxide (PEO).

The amount of the positive electrode mixture layer disposed on the positive electrode current collector is preferably 250 $g/m^2$ or more from the viewpoints of increasing the energy density of a battery, and the like. According to the present embodiment, even if the amount of the positive electrode mixture layer disposed on the positive electrode current collector is 250 $g/m^2$ or more, the effect of suppressing capacity reduction accompanying a charge-discharge cycle is exhibited.

[Negative Electrode]

The negative electrode 12 includes a negative electrode current collector and a negative electrode mixture layer provided on the surface of the negative electrode current collector. As the negative electrode current collector, a foil of a metal, such as copper, that is stable in a potential range of the negative electrode 12, a film in which the metal is disposed on its surface layer, or the like can be used. The negative electrode mixture layer includes, for example, a negative electrode mixture including a negative electrode active material and a binder. The negative electrode 12 can be produced by, for example, applying a negative electrode mixture slurry including a negative electrode active material, a binder, and the like to the surface of a negative electrode current collector, drying the applied film, and then rolling the film to form a negative electrode mixture layer on both surfaces of the negative electrode current collector. Examples of the binder include examples of the positive electrode 11.

The negative electrode active material is not particularly limited as long as it can reversibly occlude and release lithium ions, and examples of the negative electrode active material include carbon materials, Si-containing materials, Sn-containing materials, and Li-Ti-containing materials. Si-containing materials are preferable from the viewpoint of increasing the capacity of a battery. Examples of the Si-containing materials include Si-containing compounds represented by $SiO_x$ ($0.5 \leq x \leq 1.6$), Si-containing compounds represented by $Li_{2y}SiO_{(2+y)}$ ($0 < y < 2$) in which Si particles are dispersed in a lithium silicate phase, and Si-containing compounds in which Si particles are dispersed in a carbon phase. The negative electrode active material is, for example, preferably a combination of a Si-containing material and a carbon material from the viewpoints of increasing the capacity of a battery and suppressing capacity reduction accompanying a charge-discharge cycle. Examples of the carbon material include graphite, graphitizable carbon (soft carbon), and non-graphitizable carbon (hard carbon). Among them, graphite, which has excellent charge-discharge stability and a small irreversible capacity, is preferable. Examples of the graphite include natural graphite such as flake graphite, massive graphite, and amorphous graphite and artificial graphite such as massive artificial graphite and graphitized mesophase-carbon microbeads.

[Separator]

As the separator 13, for example, a porous sheet having an ion permeation property and an insulating property is used. Specific examples of the porous sheet include fine porous thin films, woven fabrics, and nonwoven fabrics. As a material of the separator 13, polyolefins such as polyethylene and polypropylene, cellulose, and the like are suitable. The separator 13 may have a single-layered structure or a multilayered structure. On the surface of the separator 13, a heat-resistant layer or the like may be formed.

[Non-aqueous Electrolyte]

The non-aqueous electrolyte includes a non-aqueous solvent and an electrolyte salt. The non-aqueous electrolyte is not limited to a liquid electrolyte, and may be a solid electrolyte in which a gel polymer or the like is used. As the electrolyte salt, for example, a lithium salt such as LiFSI, LiTFSI, LiBF$_4$, or LiPF$_6$ is used. As the solvent, for example, an ester such as ethylene carbonate (EC), propylene carbonate (PC), dimethyl carbonate (DMC), ethyl methyl carbonate (EMC), diethyl carbonate (DEC), methyl acetate (MA), or methyl propionate (MP), an ether, a nitrile, an amide, or a mixed solvent of two or more kinds thereof is used. The non-aqueous solvent may contain a halogen-substituted solvent in which at least a part of hydrogen in the solvent described above is substituted with a halogen atom such as fluorine.

Examples of the halogen-substituted solvent include fluorinated cyclic carbonic acid esters such as fluoroethylene carbonate (FEC), fluorinated chain carbonic acid esters, and fluorinated chain carboxylic acid esters such as methyl fluoropropionate (FMP).

EXAMPLES

Hereinafter, the present disclosure will be further described with reference to Examples, but the present disclosure is not limited to these Examples.

<Example 1>

[Production of Composite Oxide A]

A transition metal oxide represented by $Ni_{0.90}Co_{0.5}Al_{0.05}O_2$ and $Sr(OH)_2$ were mixed so that the content of Sr was 1.0 mol% based on the total amount of Ni, Co, and Al in the transition metal oxide, and lithium hydroxide monohydrate (LiOH·H$_2$O) was further mixed so that the molar ratio of the total amount of Ni, Co, Al, and Sr and the amount of Li was 1 : 1.03. The mixture was fired under an oxygen stream having an oxygen concentration of 95% (flow rate of 10 L/min with respect to 1 kg of the mixture) at a temperature rise rate of 2°C/min from room temperature to 650°C, and then fired at a temperature rise rate of 1°C/min from 650°C to 800°C. The fired product was washed with water to remove impurities, and thus a composite oxide A was obtained. This composite oxide A was used as a positive electrode active material in Example 1.

[Production of Positive Electrode]

The positive electrode active material, a carbon nanotube (having an outermost diameter ($\varphi$) of 1.5 nm and a fiber length (L) of 5 $\mu$m) as a conductive agent, and polyvinylidene fluoride (PVdF) were mixed at a solid content mass ratio of 100 : 0.05 : 1.0, an appropriate amount of N-methyl-2-pyrrolidone (NMP) was added, and then the resulting mixture was kneaded to prepare a positive electrode mixture slurry. The positive electrode mixture slurry was applied to both surfaces of a positive electrode current collector formed using an aluminum foil, the applied film was dried and then rolled using a roller, and then the resulting product was cut into a predetermined electrode size to obtain a positive electrode in which a positive electrode mixture layer was formed on both surfaces of the positive electrode current collector. The amount of the positive electrode mixture layer on the positive electrode current collector was 300 g/m$^2$.

[Production of Negative Electrode]

Graphite as a negative electrode active material, SiO, sodium carboxymethylcellulose, and styrene butadiene rubber were mixed at a mass ratio of 95 : 5 : 1 : 1, and an appropriate amount of water was added to adjust a negative electrode mixture slurry.

[Preparation of Non-aqueous Electrolyte]

Ethylene carbonate (EC), methylethyl carbonate (MEC), and dimethyl carbonate (DMC) were mixed at a volume ratio of 3 : 3 : 4. In the resulting mixed solvent, lithium hexafluorophosphate (LiPF$_6$) was dissolved so that the concentration of LiPF$_6$ was 1.2 mol/L, and thus a non-aqueous electrolyte was prepared.

[Production of Test Cell]

The positive electrode and the negative electrode were stacked so as to face each other with a separator interposed therebetween, and the resulting product was wound to produce an electrode assembly. Next, the electrode assembly was housed in a bottomed cylindrical battery case body, the non-aqueous electrolyte was injected, and then the opening of the battery case body was sealed with a gasket and a sealing assembly to produce a test cell.

<Example 2>

A composite oxide A was produced in the same manner as in Example 1 except that a transition metal oxide represented by $Ni_{0.90}Co_{0.05}Al_{0.05}O_2$ and $Ca(OH)_2$ were mixed so that the content of Ca was 1.0 mol% based on the total amount of Ni, Co, and Al in the transition metal oxide, and lithium hydroxide monohydrate ($LiOH \cdot H_2O$) was further mixed so that the molar ratio of the total amount of Ni, Co, Al, and Ca and the amount of Li was 1 : 1.03. A test cell was produced in the same manner as in Example 1 except that this composite oxide A was used as a positive electrode active material in Example 5, and the positive electrode active material, a carbon nanotube (having an outermost diameter ($\varphi$) of 1.5 nm and a fiber length (L) of 5 $\mu$m) as a conductive agent, and polyvinylidene fluoride (PVdF) were mixed at a solid content mass ratio of 100 : 0.05 : 1.0.

<Example 3>

A test cell was produced in the same manner as in Example 2 except that in production of the positive electrode, the composite oxide A in Example 2 was used as a positive electrode active material, and this positive electrode active material, a carbon nanotube (having an outermost diameter ($\varphi$) of 8 nm and a fiber length (L) of 2 $\mu$m) as a conductive agent, and polyvinylidene fluoride (PVdF) were mixed at a solid content mass ratio of 100 : 0.5 : 1.0.

<Example 4>

In production of the positive electrode, the composite oxide A in Example 3 was used as a positive electrode active material, this positive electrode active material, a carbon nanotube (having an outermost diameter ($\varphi$) of 8 nm and a fiber length (L) of 2 $\mu$m) as a conductive agent, and polyvinylidene fluoride (PVdF) were mixed at a solid content mass ratio of 100 : 0.5 : 1.0, an appropriate amount of N-methyl-2-pyrrolidone (NMP) was added, and then the resulting mixture was kneaded to prepare a positive electrode mixture slurry. The positive electrode mixture slurry was applied to both surfaces of a positive electrode current collector formed using an aluminum foil, the applied film was dried and then rolled using a roller, and then the resulting product was cut into a predetermined electrode size to obtain a positive electrode in which a positive electrode mixture layer was formed on both surfaces of the positive electrode current collector. A test cell was produced in the same manner as in Example 2 except that the amount of the positive electrode mixture layer on the positive electrode current collector was 250 g/m$^2$.

<Example 5>

A composite oxide A was produced in the same manner as in Example 4 except that a transition metal oxide represented by $Ni_{0.88}Co_{0.10}Al_{0.02}O_2$ and $Sr(OH)_2$ were mixed so that the content of Sr was 1.0 mol% based on the total amount of Ni, Co, and Al in the transition metal oxide, and lithium hydroxide monohydrate ($LiOH \cdot H_2O$) was further mixed so that the molar ratio of the total amount of Ni, Co, Al, and Ca and the amount of Li was 1 : 1.03. A test cell was produced in the same manner as in Example 1 except that this composite oxide A was used as a positive electrode active material in Example 5, and the positive electrode active material, a carbon nanotube (having an outermost diameter ($\varphi$) of 1.5 nm and a fiber length (L) of 5 $\mu$m) as a conductive agent, and polyvinylidene fluoride (PVdF) were mixed at a solid content mass ratio of 100 : 0.05 : 1.0.

<Comparative Example 1>

A test cell was produced in the same manner as in Example 1 except that $Sr(OH)_2$ was not added in production of the composite oxide A.

<Comparative Example 2>

A test cell was produced in the same manner as in Example 1 except that in production of the composite oxide A, $Sr(OH)_2$ was not added, and in production of the positive electrode, the positive electrode active material, a carbon nanotube (having an outermost diameter ($\varphi$) of 8 nm and a fiber length (L) of 2 $\mu$m) as a conductive agent, and polyvinylidene fluoride (PVdF) were mixed at a solid content mass ratio of 100 : 0.5 : 1.0.

<Comparative Example 3>

A test cell was produced in the same manner as in Example 1 except that in production of the positive electrode, the positive electrode active material, acetylene black (having an average particle diameter ($\varphi$) of about 30 nm) as a conductive agent, and polyvinylidene fluoride (PVdF) were mixed at a solid content mass ratio of 100 : 1.0 : 1.0.

<Comparative Example 4>

A test cell was produced in the same manner as in Example 2 except that in production of the positive electrode, the positive electrode active material, acetylene black (having an average particle diameter ($\varphi$) of about 30 nm) as a conductive agent, and polyvinylidene fluoride (PVdF) were mixed at a solid content mass ratio of 100 : 1.0 : 1.0.

<Comparative Example 5>

A test cell was produced in the same manner as in Example 5 except that in production of the positive electrode, the positive electrode active material, acetylene black (having an average particle diameter ($\varphi$) of about 30 nm) as a conductive agent, and polyvinylidene fluoride (PVdF) were mixed at a solid content mass ratio of 100 : 1.0 : 1.0.

[Charge-Discharge Cycle Test]

Each test cell in Examples and Comparative Examples was charged at a constant current of 0.5 It under a temperature environment of 25°C until the battery voltage reached 4.2 V, and charged at a constant voltage of 4.2 V until the current value reached 1/100 It. Thereafter, the test cell was discharged at a constant current of 1 It until the battery voltage reached 2.5 V This charge-discharge cycle was repeated 100 times.

For each test cell in Examples and Comparative Examples, the discharge capacity at the 1st cycle and the discharge capacity at the 100th cycle in the cycle test were determined, and the capacity maintenance rate was calculated with the following formula. Table 1 summarizes the results.

$$\text{Capacity maintenance rate (\%)} = (\text{discharge capacity at 100th cycle} \div \text{discharge capacity at 1st cycle}) \times 100$$

[Table 1]

| | Composite material A | | Conductive agent | | | | Test |
|---|---|---|---|---|---|---|---|
| | Ni ratio (mol%) | alkaline earth metal element on particle surface | Kind | $\varphi$ (nm) | L ($\mu$m) | Content (mass%) | Capacity maintenance rate (%) |
| Example 1 | 90 | Sr | Carbon nanotube | 1.5 | 5 | 0.05 | 93.5 |
| Example 2 | 90 | Ca | Carbon nanotube | 1.5 | 5 | 0.05 | 94.3 |
| Example 3 | 90 | Ca | Carbon nanotube | 8 | 2 | 0.5 | 94.0 |
| Example 4 | 90 | Ca | Carbon nanotube | 8 | 2 | 0.5 | 95.1 |
| Example 5 | 88 | Sr | Carbon nanotube | 1.5 | 5 | 0.05 | 94.4 |

(continued)

| | Composite material A | | Conductive agent | | | | Test |
|---|---|---|---|---|---|---|---|
| | Ni ratio (mol%) | alkaline earth metal element on particle surface | Kind | $\varphi$ (nm) | L ($\mu$m) | Content (mass%) | Capacity maintenance rate (%) |
| Comparative Example 1 | 90 | - | Carbon nanotube | 1.5 | 5 | 0.05 | 85.7 |
| Comparative Example 2 | 90 | - | Carbon nanotube | 8 | 2 | 0.5 | 85.3 |
| Comparative Example 3 | 90 | Sr | Acetylene black | 30 | - | 1 | 77.6 |
| Comparative Example 4 | 90 | Ca | Acetylene black | 30 | - | 1 | 80.5 |
| Comparative Example 5 | 88 | Sr | Acetylene black | 30 | - | 1 | 86.2 |

Although the composite oxide A having a high Ni content was used as a positive electrode active material in all of Examples and Comparative Examples, the test cells in Examples 1 to 5 had a higher capacity maintenance rate after the charge-discharge cycle test than the test cells in Comparative Examples 1 to 5, and capacity reduction accompanying a charge-discharge cycle was suppressed.

REFERENCE SIGNS LIST

10        Secondary battery
11        Positive electrode
12        Negative electrode
13        Separator
14        Electrode assembly
15        Battery case
16        Case body
17        Sealing assembly
18, 19    Insulating plate
20        Positive electrode lead
21        Negative electrode lead
22        Inward protrusion
23        Filter
24        Lower vent member
25        Insulating member
26        Upper vent member
27        Cap
28        Gasket

**Claims**

1.  A positive electrode for secondary batteries, the positive electrode comprising:

    a positive electrode current collector; and
    a positive electrode mixture layer disposed on the positive electrode current collector,
    the positive electrode mixture layer that includes a positive electrode active material including a lithium-transition metal composite oxide and includes carbon fibers having an outermost diameter of 20 nm or less,
    the lithium-transition metal composite oxide including 80 mol% or more of Ni based on a total number of moles of metal elements excluding Li, the lithium-transition metal composite oxide including particles having a surface on which an alkaline earth metal element is present, wherein

a content of the carbon fibers is 0.01 mass% or more and 1.0 mass% or less based on a total amount of the positive electrode active material.

2. The positive electrode for secondary batteries according to claim 1, wherein the lithium-transition metal composite oxide is represented by a general formula of $Li_yNi_{(1-x)}M_xO_2$ wherein $0 \leq x \leq 0.2$, $0 < y \leq 1.2$, and M represents one or more elements selected from Co, Al, Mn, Fe, Ti, Sr, Ca, and B, the general formula excluding the alkaline earth metal element present on the surface of the particles in the lithium-transition metal composite oxide.

3. The positive electrode for secondary batteries according to claim 1 or 2, wherein the carbon fibers have a fiber length of 0.1 $\mu$m or more and 20 $\mu$m or less.

4. The positive electrode for secondary batteries according to any one of claims 1 to 3, wherein the content of the carbon fibers is 0.01 mass% or more and 0.5 mass% or less based on the total amount of the positive electrode active material.

5. The positive electrode for secondary batteries according to any one of claims 1 to 4, wherein the alkaline earth metal element present on the surface of the particles in the lithium-transition metal composite oxide includes at least one of Ca or Sr.

6. The positive electrode for secondary batteries according to any one of claims 1 to 5, wherein an amount of the positive electrode mixture layer disposed on the positive electrode current collector is 250 g/m$^2$ or more.

7. The positive electrode for secondary batteries according to any one of claims 1 to 6, wherein the lithium-transition metal composite oxide includes 85 mol% or more of Ni based on the total number of moles of metal elements excluding Li.

8. The positive electrode for secondary batteries according to any one of claims 1 to 7, wherein the carbon fibers include a single-walled carbon nanotube and/or a double-walled carbon nanotube.

9. The positive electrode for secondary batteries according to any one of claims 1 to 7, wherein the carbon fibers include a multi-walled carbon nanotube.

10. A secondary battery comprising a positive electrode and a negative electrode, the positive electrode being the positive electrode for secondary batteries according to any one of claims 1 to 9.

11. The secondary battery according to claim 10, wherein the negative electrode includes a Si-containing material.

# Figure 1

## INTERNATIONAL SEARCH REPORT

| | International application No. |
|---|---|
| | PCT/JP2021/011954 |

A. CLASSIFICATION OF SUBJECT MATTER
H01M 4/131(2010.01)i; H01M 4/36(2006.01)i; H01M 4/505(2010.01)i; H01M 4/525(2010.01)i; H01M 4/62(2006.01)i; H01M 10/052(2010.01)i
FI: H01M4/131; H01M4/62 Z; H01M4/36 A; H01M4/525; H01M4/505; H01M10/052
According to International Patent Classification (IPC) or to both national classification and IPC

B. FIELDS SEARCHED

Minimum documentation searched (classification system followed by classification symbols)
H01M4/131; H01M4/36; H01M4/505; H01M4/525; H01M4/62; H01M10/052

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2019/073830 A1 (DENKA COMPANY LIMITED) 18 April 2019 (2019-04-18) paragraphs [0013]-[0014], [0017], [0024]-[0025], [0032]-[0043] | 1–11 |
| Y | JP 2016-31881 A (HITACHI MAXELL, LTD.) 07 March 2016 (2016-03-07) paragraphs [0019]-[0021], [0026], [0034], [0083], [0086], [0093], [0110]-[0128] | 1–11 |
| Y | JP 2018-535520 A (LG CHEM, LTD.) 29 November 2018 (2018-11-29) paragraph [0020] | 6–11 |
| A | JP 2009-32467 A (NIPPON CHEMICAL INDUSTRIAL CO., LTD.) 12 February 2009 (2009-02-12) entire text, all drawings | 1–11 |
| A | WO 2018/051667 A1 (NEC CORP.) 22 March 2018 (2018-03-22) entire text, all drawings | 1–11 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 May 2021 (21.05.2021) | 08 June 2021 (08.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

| International application No. |
|---|
| PCT/JP2021/011954 |

| Patent Documents referred in the Report | Publication Date | Patent Family | Publication Date |
|---|---|---|---|
| WO 2019/073830 A1 | 18 Apr. 2019 | EP 3686965 A1 paragraphs [0013]-[0015], [0018], [0025]-[0026], [0032]-[0044] CN 109659506 A KR 10-2020-0073241 A | |
| JP 2016-31881 A | 07 Mar. 2016 | (Family: none) | |
| JP 2018-535520 A | 29 Nov. 2018 | US 2018/0219212 A1 paragraph [0025] WO 2017/099481 A1 EP 3319151 A1 KR 10-2017-0069153 A CN 107925056 A | |
| JP 2009-32467 A | 12 Feb. 2009 | US 2011/0020704 A1 entire text, all drawings WO 2009/014158 A1 EP 2178138 A1 KR 10-2010-0049556 A CN 101765934 A | |
| WO 2018/051667 A1 | 22 Mar. 2018 | US 2019/0280284 A1 entire text, all drawings CN 109716562 A | |

Form PCT/ISA/210 (patent family annex) (January 2015)

**REFERENCES CITED IN THE DESCRIPTION**

**Patent documents cited in the description**

- JP 2006054159 A